# EUROPEAN PATENT APPLICATION

(11) **EP 1 211 448 A2**
(43) Date of publication of application: **05.06.2002**
(21) Application number: 01128100.3
(22) Date of filing: 27.11.2001
(51) Int. Cl.: F16K 31/06

(54) **Solenoid microvalve**

(30) Priority: 29.11.2000 IT MI002576
(71) Applicant: Migliori, Luciano, 20090 Milano 2, Segrate (MI) (IT)
(72) Inventor: Migliori, Luciano, 20090 Milano 2, Segrate (MI) (IT)
(74) Representative: Coloberti, Luigi

(57) **Abstract**

A solenoid microvalve for fluids, of the type comprising a valve unit (10) and a solenoid control device (11) which can be mutually engaged and disengaged by means of a snap coupling (31, 31). The valve unit (10) comprises a sleeve (20, 28) for housing a movable magnetic member (19) and a steady magnetic core member (18), which extend axially in a coil (14) defining the magnetic circuit of the solenoid control device (11), and in which the movable magnetic core (19) is biased, by a spring (25), towards a position in which it closes a flow passageway (12) in the microvalve. The sleeve (20, 28) comprises a rear portion (20) of magnetically conductive material, for circulation of the magnetic flux, which extends from one side of the valve unit (10), and a front portion (28) of magnetically non-conductive material, from which the steady core member (18) partially protrudes. The rear sleeve portion (20) is provided with an annular slot (26) which engages by snapping a hooking spring (32) provided on a front side of the solenoid control device (11).

## Description

### BACKGROUND OF THE INVENTION

This invention refers to improvements to solenoid microvalves and more particularly relates to a solenoid microvalve assembly of the type comprising a valve unit and a solenoid control device, having improved magnetic performances, which can be mutually engaged and disengaged by means of a snap coupling.

Valve assemblies of the aforementioned type are usually available on the market and used, for example, with automation systems on suitable base members for distribution of a pressurised fluid, or for feeding both liquid and gaseous fluids.

Solenoid microvalves of this type generally comprise a valve unit and a solenoid control device which may be mutually engaged and disengaged by means of a snap coupling. Usually the valve unit is provided with axially aligned steady and movable magnetic cores inside a sleeve made of magnetically non-conductive material, for example made of brass, which extends from the valve body, centrally within a magnetic circuit of the solenoid control device. The movable magnetic core member slides axially in the housing sleeve, and is urged by a biasing spring towards a forward position in which it closes a flow-passage for the fluid in the valve unit.

Usually, the solenoid control device is provided with a metal bush through which the sleeve housing the steady magnetic core member and the movable core member is disposed into the magnetic circuit of the solenoid-actuated control device, during assembly.

The bush for the introduction of the sleeve housing the magnetic cores, is designed to penetrate into a cavity at the fore side of the valve body, and is provided with a circular slot which engages, by snapping, a retaining spring provided by a clip disposed on one side, into an appropriate seat in the body of the valve unit.

Solenoid microvalves of the aforementioned type are shown for example, in US-A-4,913,399 or in the corresponding European patent application EP-A-0.336.226, to which reference is specifically made.

In solenoid-actuated microvalves of this type there are a number of problems deriving from the sleeve housing the magnetic cores, and from the snap on hooking system between the valve body and the control solenoid, which have a negative effect on the magnetic circuit, and the magnetic power or force.

In particular, due to the extremely limited dimensions of the microvalve, and due to the particular configuration and disposition of the hooking system for coupling the solenoid to the body of the valve, the sleeve housing the magnetic cores must be entirely made of magnetically non conductive material, for example of brass, in order to prevent the magnetic flux from being short-circuited by the same sleeve without affecting the movable core, thereby jeopardising the correct operation of the valve.

The presence of a brass sleeve in correspondence with the circulation point of the flux between the magnetic circuit inside the solenoid and the movable magnetic core inside the sleeve, inevitably causes a magnetic voltage drop and greater flux leakage, which substantially reduce the power efficiency of the solenoid valve and the force generated, by a percentage estimated to be in the range of 10-15%. Consequently, due to the extremely limited dimensions of the valve unit, the flow passages for the fluid and the flow rate of the valve must be maintained comparatively low, without any possibility of increasing them except by an unacceptable increasing of the overall dimensions of the microvalve.

### OBJECT OF THE INVENTION

The object of this invention is therefore to provide a solenoid microvalve, of the aforementioned type, appropriately improved and capable of obviating the problems of the conventional microvalves.

In particular, a main object of this invention is to provide a solenoid-actuated microvalve which, by maintaining the same overall dimensions of an usual microvalve and the same features of the control solenoid device, makes it possible to achieve a greater power.

Consequently, a further object of this invention is to provide a solenoid microvalve of the aforementioned type provided with flow passages for the fluid of greater dimensions, and therefore suitable for a higher flow rate.

A still further object of this invention is to provide a solenoid microvalve as referred to, which is provided with a snap-on coupling system between the valve unit and the solenoid control device, capable of allowing a different configuration of the sleeve housing the magnetic cores, while at the same time providing a self-centring action capable of maintaining the solenoid device and the microvalve body perfectly aligned with each other.

### BRIEF DESCRIPTION OF THE INVENTION

These and further objects according to the invention are achieved by means of the solenoid-actuated microvalve assembly according to claim 1.

In particular, according to the invention, a solenoid actuated microvalve assembly for fluids has been provided, of the type comprising:
- a valve unit having a valve body provided with a flow passage for a fluid;
- a solenoid control device comprising a reel for winding up a coil of a magnetic circuit defining a flux circulation path;
- snap coupling means to engage and disengage said valve body in respect to the solenoid control device; and
- a sleeve member for housing a magnetic core unit to be disposed into the magnetic circuit of the solenoid control device;
- said core unit comprising a steady core member at the front end of the sleeve, and a movable core member at the rear end of the sleeve, and a biasing spring to urge said movable core member to close the flow passage for the fluid in the valve body,
characterised in that the sleeve housing the magnetic core unit comprises:
- a front sleeve portion of magnetically non conductive material to retain the steady core member into said magnetic circuit, in the engaged condition of the valve assembly; and
- a rear sleeve portion of magnetically conductive material to axially guide the movable core member, said rear sleeve portion partially extending into the flow path, between the solenoid control device and the movable core member of the valve assembly.

According to another embodiment of the invention, the snap coupling means between the valve unit and the control device comprise an annular slot on the outer surface of the rear sleeve portion, and an elastically yielding hooking element provided in a seat on at least one side of a front hole for threading the sleeve member of the valve unit, into the magnetic path of the solenoid device.

According to a preferred embodiment, the hooking element is in the form of a U-shaped spring which engages in diametrically opposite positions with the annular slot of the rear portion of the metal sleeve. In this way, the spring hooking element exerts a self-centring action on the sleeve member capable of maintaining the valve unit and the solenoid control device perfectly aligned, thereby ensuring better operating conditions for the entire valve assembly.

### BRIEF DESCRIPTION OF THE DRAWINGS

These and further features of the solenoid-actuated microvalve assembly according to the invention will be described hereunder in greater detail with reference to the accompanying drawings, in which:
Fig. 1 shows a general view of a microvalve assembly according to the invention;
Fig. 2 shows an enlarged partial cutaway view along the line 2-2 of figure 1;

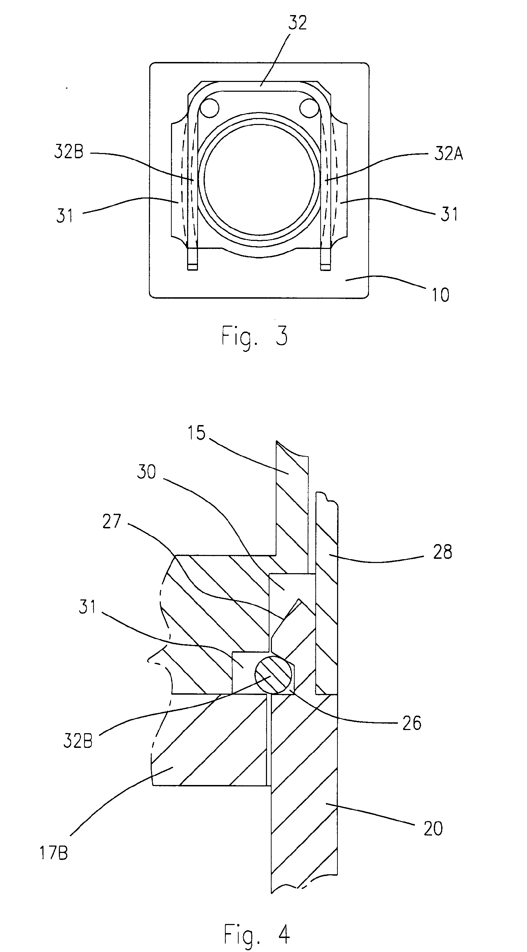

Fig. 3 shows a front view of the solenoid control device, along the line 3-3 of figure 2;
Fig. 4 shows an enlarged detail of figure 2.

### DETAILED DESCRIPTION OF THE INVENTION

With reference to the accompanying drawings, a description will be given of a preferred embodiment of the invention.

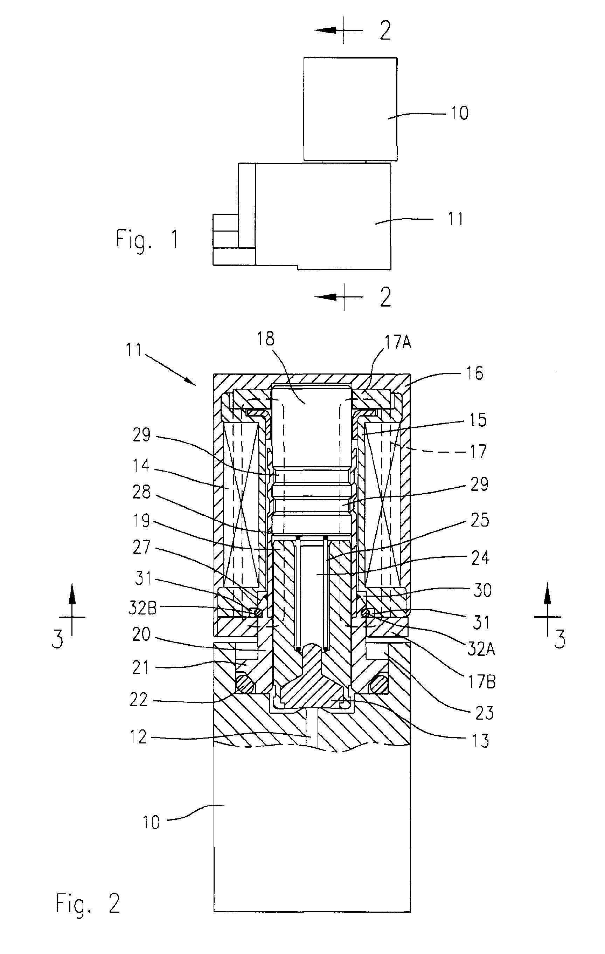

As shown in figure 1, reference 10 has been used to indicate a generic microvalve body, of any known type, while reference 11 has been used to indicate a solenoid control device which may be mechanically connected to the microvalve body 10 by means of snap coupling means, as described further on.

The microvalve body 10 comprises a flow passage 12 for a fluid, partially shown, connected in a per se known manner to inlet and/or outlet ports for the fluid; in the case shown, the flow passage 12 can be closed by a valve member 13 provided at the rear end of a movable magnetic core member 19 of the solenoid control device 11 described further on. Unlike that shown, the movable core member 19 of the solenoid, could act on a separate valve member, inside the microvalve, to indirectly close a flow passage for the fluid to be fed or made to circulate to and from a user.

The solenoid control device 11 comprises an electric coil 14 wound on an insulating reel 15 housed in a casing 16 of moulded plastic material.

The magnetic flux generated by the coil 14, as shown, flow along the longitudinal axis of the coil and closes externally along a magnetic armature 17, substantially provided by of a C-shaped magnetic bridge having end wings 17A and 17B folded against the outer flanges of the reel 15 on which the coil 14 is wound.

The magnetic circuit of the solenoid control device 11, also comprises a core member provided by a steady core member 18 and a movable core member 19.

As shown in the sectional view of figure 2, both the steady magnetic core member 18 and the movable magnetic core member 19 are axially aligned and housed inside a sleeve which extends from one side of the microvalve body 10, and which is designed to be threaded into a front opening of the reel 15 on which the electric coil 14 is wound, so that the core members 18 and 19 are linked with the magnetic circuit of the coil.

In particular, the sleeve housing the magnetic cores comprises a rear sleeve portion 20, made of magnetically conductive metal material, provided with a flange 21 at the rear end which is sealingly inserted, by means of a seal 22, and locked into a seat 23 on the front side of the body 10 of the microvalve.

The rear sleeve portion 20 extends along a substantial length of the movable core 19, so as to axially guide the latter from a forward position in which it closes the flow passage 12, to a rearward position in which it opens the flow passage 12, depending upon whether the solenoid 11 is activated or deactivated, respectively.

In this connection, the movable core member 19 is provided with a central dead end hole 24, into which is inserted a biasing spring 25 which acts to push the movable core member 19 and the valve member 13 for closing against the flow passage 12.

The assembly of the microvalve 10 and solenoid control device 11 is also provided with snap coupling means enabling them to engage and disengage, respectively, by means of a simple push and pull action.

In this connection, the rear sleeve member 20 is provided, on the outer surface, with an annular slot 26 in a position immediately behind a chamfered edge 27.

The sleeve for the magnetic core also comprises a fore sleeve portion 28 made of magnetically non-conductive material, for example made of brass, secured to the front end of the sleeve portion 20, and from which partially protrudes the steady magnetic core member 18, which is secured to the sleeve portion 28 by a simple crimping or deformation of the sleeve along two annular slots 29, as shown.

Also as shown in figure 2, the front end of the sleeve portion 20 extends into a circular recess 30 of the flange of the reel 15, at the end of the solenoid control device 11, comprising on two opposing sides the seats 31 for housing a small U-shaped hooking spring 32; the arms 32A and 32B of the spring 32 can elastically yield sideways to engage, in diametrically opposite positions, and snap into the annular slot 26 of sleeve portion 20.

For what has been described previously, the innovative features of the solenoid-actuated microvalve according to the invention therefore consists in the use of sleeve unit housing the magnetic cores provided by differentiated magnetic features, that is to say comprising a first sleeve portion 20 made of magnetically conductive material, which surrounds and guides the movable core member 19, and a second sleeve portion 28 made of magnetically non-conductive material, to which the steady magnetic core member 18 is fastened.

The use of a sleeve unit comprising a rear portion for guiding the movable magnetic core member 19 and for circulation of the magnetic flux offers the indubitable advantage of substantially reducing the causes of flux leakage and loss of power, thereby improving the efficiency of the solenoid and of the microvalve in general. In addition, the disposition and shape of the hooking spring housed in the solenoid casing, more precisely in correspondence with an end flange of the reel 15 on which the coil 14 is wound, allows a favourable self-centring action when the sleeve of the microvalve 10 is threaded into the reel 15 of the solenoid control device 11, in their assembled condition.

It is understood however that what has been described and shown has been given purely by way of example, and that other modifications or variations may be made, both to the microvalve 10 and to the solenoid 11, without departing from the appended claims.

## Claims

1. A solenoid actuated microvalve assembly for fluids comprising:
- a valve unit having a valve body (10) provided with a flow passage (12) for a fluid;
- a solenoid control device (11) comprising a reel (15) for winding up a coil (14) of a magnetic circuit defining a flux circulation path;
- snap coupling means (26, 32) to engage and disengage said valve body (10) in respect to the solenoid control device (11); and
- a sleeve member (20, 28) for housing a magnetic core member (18, 19) to be disposed into the magnetic circuit (15) of the solenoid control device (11);
- said core member (18, 19) comprising a steady core member (18) at the front end of the sleeve (20, 28) and a movable core member (19) at the rear end of the sleeve (20, 28), and a biasing spring (25) to urge said movable core member (19) to close the flow passage (12) for the fluid in the valve body (10),
**characterised in that** the sleeve housing (20, 28) the magnetic core member (18, 19) comprises:
- a front sleeve portion (28) of magnetically non conductive material to retain the steady core member (18) into said magnetic circuit (15), in the assembled condition of the valve assembly (10, 11); and
- a rear sleeve portion (20) of magnetically conductive material to axially guide the movable core member (19), said rear sleeve portion (20) partially extending into the flow path (15), between the solenoid control device (11) and the movable core member (19) of the valve assembly (10, 11).

2. A solenoid microvalve assembly (10, 11) as claimed in claim 1, **characterised in that** the snap coupling means (26, 32) comprises an annular slot (26) on the outer surface of the rear portion (20) of the sleeve (20, 28) housing the magnetic core members (18, 19), and an elastically yielding hooking element (32) in a seat (31) on a front side of the solenoid control device (11).

3. A solenoid microvalve assembly (10, 11) as claimed in claim 2, **characterised in that** the hooking element (32) is in the form of a U-shaped spring engaging in diametrically opposite positions of the annular slot (31) of the rear portion (20) of the sleeve (20, 28).

4. A solenoid microvalve assembly as claimed in claim 3, **characterised in that** the U-shaped spring (32) is housed in a seat (31) provided in a flange at an end of a reel (15) on which the electric coil (14) of the solenoid (11) is wound.

5. A solenoid microvalve assembly as claimed in claim 1, **characterised in that** the movable core member (19) comprises a valve member (13) for closing the flow passage (12), at one end.

6. A solenoid microvalve assembly as claimed in claim 1, **characterised in that** the rear portion (20), of the sleeve (20, 28) is extending over a substantial length of the movable core member (19).
